# FASCICULE DE BREVET EUROPEEN

(11) **EP 3 750 832 B1**
(45) Date de publication et mention de la délivrance du brevet: **15.09.2021**
(21) Numéro de dépôt: 20173890.3
(22) Date de dépôt: 11.05.2020
(51) Int. Cl.: B65G 1/137, G06Q 10/08, G06Q 10/06, G06Q 50/28

(54) **PROCEDE DE TRAITEMENT D'UNE LISTE DE COMMANDES DANS UN SYSTEME DE PREPARATION DE COMMANDES, ET SYSTEME DE PREPARATION DE COMMANDES CORRESPONDANT**
VERARBEITUNGSVERFAHREN EINER LISTE VON BESTELLUNGEN IN EINEM VORBEREITUNGSSYSTEM VON BESTELLUNGEN, UND ENTSPRECHENDES VORBEREITUNGSSYSTEM VON BESTELLUNGEN
METHOD FOR PROCESSING A LIST OF COMMANDS IN A SYSTEM FOR PREPARATION OF ORDERS, AND CORRESPONDING PREPARATION AND CONTROL SYSTEM

(30) Priorité: 23.05.2019 FR 1905411
(43) Date de publication de la demande: 16.12.2020
(73) Titulaire: Savoye, 21000 Dijon (FR)
(72) Inventeur: PIETROWICZ, Stéphane, 21220 Fixin (FR)
(74) Mandataire: Vidon Brevets & Stratégie

(56) Documents cités:
- EP-A1- 1 199 667
- WO-A1-2017/149695
- WO-A1-2018/006112
- DE-A1- 19 823 083
- US-A1- 2015 114 799

## Description

### 1. DOMAINE TECHNIQUE

Le domaine de l'invention est celui de la logistique, et en particulier celui des systèmes de préparation de commandes (aussi appelés « systèmes de picking ») de type « Articles vers Homme » ou « Articles vers Robot » (respectivement « Goods-To-Person » (ou GTP) et « Goods-To-Robot » en anglais), dans lesquels ce sont les différents articles (aussi appelés « produits » ou « charges unitaires ») d'une commande qui doivent venir à l'opérateur (ou au robot) et non pas le contraire.

Plus précisément, l'invention concerne un procédé de traitement d'une liste de commandes dans un tel système de préparation de commandes, ainsi qu'un système de préparation de commandes correspondant (c'est-à-dire configuré pour la mise en œuvre du procédé).

Les systèmes de préparation de commandes sont notamment utilisés dans les entreprises d'expédition et de vente à distance de produits de petit volume. Les principaux exemples d'utilisateurs de tels systèmes sont les fournisseurs de matériels de bureau, de vêtements, de produits cosmétiques, d'outillages ou de pièces détachées dans l'industrie mécanique. Ces systèmes permettent de préparer avec un minimum de main-d'œuvre, dans un délai court et avec un suivi précis des stocks, une charge d'expédition (colis d'expédition) correspondant à une commande précise d'un client.

Un exemple de système automatisé de préparation de commandes est décrit notamment dans la demande de brevet FR2915979A1 déposée par la demanderesse. Il comprend par exemple :
- un magasin de stockage automatisé (aussi appelé « équipement automatisé de stockage et déstockage ») renfermant les produits (articles) dans des contenants de stockage (charges sources), chaque contenant de stockage étant associé à une (ou plusieurs) référence(s) de produit. En effet, même si ce n'est pas le cas le plus fréquent, le contenant de stockage peut dans certains cas être associé a plusieurs références de produits (les produits des différentes références étant, selon les configurations, physiquement séparés entre eux, ou partiellement séparés entre eux, ou encore totalement mélangés) ;
- (au moins) un poste de préparation de commande, où les produits sont prélevés et placés par un opérateur (ou un robot) dans un colis d'expédition (charge d'expédition) ;
- un ensemble de convoyeurs (ou robots mobiles) amenant les contenants de stockage, dans lesquels se trouvent les produits, du magasin de stockage au poste de préparation de commande, et réciproquement ; et
- un système de pilotage (WCS).

### 2. ARRIÈRE-PLAN TECHNOLOGIQUE

Dans un système de préparation de commande, chaque commande comprend une ou plusieurs lignes de commande. Chaque ligne de commande comprend un identifiant de commande, une référence et une quantité de charge unitaire (c'est-à-dire une référence de charge unitaire et une quantité de charge unitaire de cette référence), et un niveau de priorité.

Un système de préparation de commande comprend notamment un système de pilotage (aussi appelé « unité de pilotage » ou « système informatique de gestion central ») et au moins un poste de préparation (aussi appelé « poste de picking »).

Chaque poste de préparation reçoit d'une part des charges sources (aussi appelées « supports sources », « supports internes » ou « contenants de stockage »), contenant chacune des charges unitaires d'une (ou plusieurs) des références, et d'autre part des charges d'expédition (aussi appelées « supports de destination », « supports externes », « colis » ou « contenants d'expédition »), destinées à contenir chacune les charges unitaires requises par une des commandes. Plus précisément, chaque poste de préparation comprend une ou plusieurs positions de prélèvement, où sont présentées les charges sources, et une ou plusieurs positions d'insertion, où sont présentées les charges d'expédition. Un opérateur (ou un robot) est placé devant la ou les positions de prélèvement et la ou les positions d'insertion et il effectue les actions suivantes : pour chaque ligne de commande d'une commande donnée (et donc d'une référence donnée de charges unitaires), prélèvement dans une des charges sources de la quantité souhaitée de charges unitaires et insertion de ces charges unitaires dans une des charges d'expédition.

Dans le cas où toutes les charges unitaires requises par une commande formulée par un client ne pourraient pas être contenues dans une seule charge d'expédition, on suppose que, dans une étape préalable au traitement proposé et détaillé ci-après, la commande formulée par le client est divisée en une pluralité de commandes au sens précitées (c'est-à-dire pour chacune desquelles les charges unitaires requises peuvent être contenues dans une seule charge d'expédition).

Du fait qu'il est fréquent à la fois que plusieurs commandes requièrent le même type de référence (référence commune à plusieurs commandes) et qu'une même commande requière plusieurs types de référence (commande à références multiples), les postes de préparation de commande actuels sont du type « n positions de prélèvement vers m positions d'insertion », avec n≥2 et m≥2. En général, n et m sont compris dans la plage [2, 6]. En d'autres termes, opérateur (ou un robot) est placé devant n positions de prélèvement (pouvant contenir n charges sources) et m positions d'insertion (pouvant contenir m charges d'expédition) et il doit préparer plusieurs commandes à la fois en effectuant les actions suivantes : pour chaque ligne de commande d'une commande donnée, il doit d'abord prélever la quantité souhaitée de charges unitaires dans une des n charges sources présentes dans les n positions de prélèvement, puis il doit insérer ces charges unitaires dans une des m charges d'expédition présentes dans les m positions d'insertion.

WO 2018/006112 A1 divulgue un procédé de préparation de commande selon le préambule de la revendication 1 ainsi qu'un système de préparation de commande associé selon le préambule de la revendication 8.

Un inconvénient des postes de préparation de commande actuels (du type « n vers m ») est que l'opérateur doit toujours être attentif pour prélever dans la bonne charge source (parmi n) et déposer dans la bonne charge d'expédition (parmi m). Cette contrainte a un impact sur la qualité de la préparation (augmentation du risque d'erreur de préparation de commandes) et la performance de l'opérateur (la charge mentale de ce dernier est élevée, du fait qu'il doit en permanence vérifier son travail, ce qui conduit à des changements fréquents d'opérateurs au poste de préparation).

Un autre inconvénient des postes de préparation de commande actuels est qu'ils ne permettent pas gérer de manière optimale l'équipement (automatisé ou non) de stockage et déstockage des charges sources, qui fournit les charges sources au poste de préparation et les reprend après l'opération de prélèvement de charges unitaires. En effet, avec les postes de préparation de commande actuels, la réduction du nombre de mouvements de sortie nécessaires par l'équipement de stockage et déstockage des charges sources (supports internes) est fonction du nombre m de positions d'insertion que comporte le poste de préparation. Or dans les solutions actuelles ce paramètre m est en pratique limité à six (m ≤ 6).

### 3. OBJECTIFS

L'invention, dans au moins un mode de réalisation, a notamment pour objectif de pallier ces différents inconvénients de l'état de la technique.

Plus précisément, dans au moins un mode de réalisation de l'invention, un objectif est de fournir une solution pour le traitement d'une liste de commandes dans un système de préparation de commandes, cette solution permettant de réduire, voire supprimer, les erreurs de préparation de commandes (prélèvement dans la mauvaise charge source et/ou dépose dans la mauvaise charge d'expédition).

Au moins un mode de réalisation de l'invention a également pour objectif de fournir une telle solution permettant de réduire la charge mentale de l'opérateur présent au poste de préparation de commandes (de sorte que ce dernier ait à gérer uniquement la quantité de charges unitaires de chaque prélèvement à garantir).

Un autre objectif d'au moins un mode de réalisation de l'invention est de fournir une telle solution permettant de réduire le nombre de mouvements de sortie nécessaires par l'équipement de stockage et déstockage des charges sources (supports internes).

Un autre objectif d'au moins un mode de réalisation de l'invention est de fournir une telle solution qui soit simple à mettre en œuvre et peu coûteuse.

### 4. RÉSUMÉ

Dans un mode de réalisation particulier de l'invention, il est proposé un procédé de traitement d'une liste de commandes dans un système de préparation de commandes, chaque commande comprenant une ou plusieurs lignes de commande, chaque ligne de commande comprenant un identifiant de commande, une référence et une quantité de charge unitaire, et un niveau de priorité, ledit système de préparation de commandes comprenant un système de pilotage et au moins un poste de préparation recevant des charges sources, contenant chacune des charges unitaires d'une ou plusieurs des références, et des charges d'expédition, destinées à contenir chacune les charges unitaires d'une des commandes, ledit au moins un poste de préparation comprenant :
- une position de prélèvement, unique et configurée pour permettre un prélèvement, dans une des charges sources, d'au moins une charge unitaire d'une des références conformément à une des lignes de commande ;
- une position d'insertion, unique et configurée permettre une insertion, dans une des charges d'expédition, de ladite au moins une charge unitaire prélevée ; et
- des moyens de recirculation, configurés pour permettre à certaines des charges d'expédition d'être placées plusieurs fois dans la position d'insertion ;

Le système de pilotage effectue les étapes suivantes :
- sélection d'une référence présente dans le plus grand nombre de lignes de commandes parmi toutes les lignes de commande de ladite liste de commandes ;
- détermination d'un ensemble E de toutes les N_{E} commandes contenant chacune une ligne de commande contenant ladite référence sélectionnée ;
- création d'un groupe G de N commandes qui sont soit les N_{E} commandes, si N_{E}≤Nₘₐₓ avec Nmax un seuil prédéterminé, soit les Nmax premières commandes résultant d'un tri des N_{E} commandes selon un ordre décroissant du niveau de priorité, si N_{E}>Nₘₐₓ ;
- construction d'une liste LC de la totalité des K lignes de commande contenues dans les N commandes du groupe G, en respectant les règles suivantes
   * si plusieurs des K lignes de commande contiennent une référence identique, elles se succèdent dans la liste LC sous la forme d'une sous-liste ;
   * les N lignes de commande incluses dans la sous-liste correspondant à ladite référence sélectionnée contiennent N identifiants de commande différents dans un ordre donné ; et
   * les lignes de commande non incluses dans la sous-liste correspondant à la référence sélectionnée contiennent des identifiants de commande, parmi les N identifiants de commande, dans un ordre cohérent avec l'ordre donné pris en boucle ; et
- pilotage du système de préparation de commandes pour amener des charges sources à la position de prélèvement et des charges d'expédition à la position d'insertion, et faire recirculer des charges d'expédition jusqu'à la position d'insertion, en fonction de la liste LC.

Ainsi, la solution proposée propose une approche tout à fait nouvelle et inventive consistant à construire une liste LC, comprenant dans un ordre particulier les K lignes de commandes d'un groupe G de N commandes, et à piloter le système de préparation de commandes en fonction de cette liste LC. La liste LC a ceci de particulier qu'elle est construite pour un poste de préparation de type « 1 vers 1 » (c'est-à-dire comprenant une seule position de prélèvement (n=1) et une seule position d'insertion (m=1)) et comprenant des moyens de recirculation. En d'autres termes, le principe de la solution proposée se caractérise par un algorithme de lancement particulier (lancement des K lignes de commande selon la liste LC) associé à la capacité de faire recirculer localement (c'est-à-dire dans le poste de préparation) certaines des charges d'expédition.

La solution proposée permet donc de bénéficier des avantages d'un poste de préparation de type « 1 vers 1 » (notamment la réduction, voire la suppression, des erreurs de préparation de commandes, ainsi que la réduction de la charge mentale de l'opérateur présent au poste de préparation), tout en permettant la préparation de commandes par éclatement (c'est-à-dire le prélèvement, dans une même charge source, de charges unitaires qui sont ensuite déposées dans différentes (N) charges d'expédition).

Un autre avantage de la solution proposée est qu'elle permet de réduire le nombre de mouvements de sortie nécessaires par l'équipement de stockage et déstockage des charges sources (supports internes). En effet, avec la solution proposée, la réduction du nombre de mouvements de sortie nécessaires par l'équipement de stockage et déstockage des charges sources (supports internes) est fonction du nombre N (avec N ≤ Nmax) qui peut être plus élevé (il est par exemple égal à 10, 15 ou plus) que le paramètre m des postes de préparation de commande actuels (qui lui est en pratique limité à 6).

Selon une caractéristique particulière, la construction de la liste LC est effectuée en respectant également la règle suivante : si au moins deux commandes du groupe G comprennent chacune des lignes de commandes dans au moins deux sous-listes, les lignes de commandes desdites au moins deux commandes suivent un même ordre de commande dans lesdites au moins deux sous-listes.

Ainsi, on minimise la recirculation locale (c'est-à-dire dans le poste de préparation, et en conséquence on réduit les ressources nécessaires à cette recirculation locale, et on peut augmenter la cadence du système de préparation de commandes.

Selon une caractéristique particulière, la construction de la liste LC est effectuée en respectant également la règle suivante : en l'absence de contrainte de précédence, pour la sous-liste correspondant à la référence sélectionnée, entre les lignes de commande comprises dans ladite sous-liste et d'autres lignes de commande non comprises dans ladite sous-liste, si la liste LC comprend au moins deux sous-listes, lesdites au moins deux sous-listes respectent entre elles un ordre décroissant du nombre de lignes de commande dans chaque sous-liste.

Ainsi, dans un contexte « sans contrainte de précédence », on peut finaliser plus rapidement certaines commandes du groupe G (et évacuer les charges d'expédition correspondantes), ce qui facilite ensuite la recirculation locale pour les charges d'expédition restantes.

Selon une caractéristique particulière, la construction de la liste LC est effectuée en respectant également la règle suivante : pour au moins une sous-liste, la dernière ligne de commande de ladite sous-liste, qui se rapporte à une commande donnée, est suivie d'une ou plusieurs lignes de commande n'appartenant à aucune sous-liste, se rapportant à ladite commande donnée et permettant de finaliser ladite commande donnée.

De cette façon, on peut également finaliser plus rapidement certaines commandes du groupe G (et évacuer les charges d'expédition correspondantes), ce qui facilite ensuite la recirculation locale pour les charges d'expédition restantes.

Selon une caractéristique particulière, la construction de la liste LC est effectuée en respectant également la règle suivante : en l'absence de contrainte de précédence, pour la sous-liste correspondant à la référence sélectionnée, entre les lignes de commande comprises dans ladite sous-liste et d'autres lignes de commande non comprises dans ladite sous-liste, l'ordre des lignes de commande de ladite sous-liste est calculé comme suit :
- pour chaque ligne de commande de ladite sous-liste : détermination de la commande contenant ladite ligne de commande, calcul du nombre de sous-listes auxquelles appartiennent l'ensemble des lignes de commande de la commande déterminée, et association du nombre calculé à ladite ligne de commande ; et
- tri des lignes de commande de ladite sous-liste selon un ordre décroissant du nombre associé à chaque ligne de commande de ladite sous-liste.

Ainsi, dans le contexte « sans contrainte de précédence », on peut finaliser plus rapidement certaines commandes du groupe G, à savoir celles dont les lignes de commande ont le plus de références communes avec les lignes de commande des autres commandes, (et donc évacuer les charges d'expédition correspondantes), ce qui facilite ensuite la recirculation locale pour les charges d'expédition restantes.

Selon une caractéristique particulière, la construction de la liste LC est effectuée en respectant également la règle suivante : en l'absence de contrainte de précédence, pour la ou chaque sous-liste, entre les lignes de commande comprises dans ladite sous-liste et d'autres lignes de commande non comprises dans ladite sous-liste, la liste LC commence par la sous-liste comprenant le plus grand nombre de lignes de commande.

Ainsi, dans le contexte « sans contrainte de précédence », on peut également finaliser plus rapidement certaines commandes du groupe G (et évacuer les charges d'expédition correspondantes), ce qui facilite ensuite la recirculation locale pour les charges d'expédition restantes.

Selon une caractéristique particulière, si après la création du groupe G il existe au moins une commande non groupée prioritaire, non comprise dans le groupe G et ayant un niveau de priorité supérieur au plus haut niveau de priorité des commandes du groupe G, le système de pilotage traite ladite au moins une commande non groupée prioritaire avant l'étape de pilotage du système de préparation de commandes en fonction de la liste LC.

De cette façon, les commandes qui ne font pas partie d'un groupe au sens précité peuvent être traitées en respectant leur niveau de priorité.

Dans un autre mode de réalisation de l'invention, il est proposé un système de préparation de commandes, configuré pour traiter une liste de commandes, chaque commande comprenant une ou plusieurs lignes de commande, chaque ligne de commande comprenant un identifiant de commande, une référence et une quantité de charge unitaire, et un niveau de priorité. Le système de préparation de commandes comprend un système de pilotage, configuré pour mettre en œuvre le procédé ci-dessus (dans l'un quelconque de ses modes de réalisation), et au moins un poste de préparation, recevant des charges sources, contenant chacune des charges unitaires d'une ou plusieurs des références, et des charges d'expédition, destinées à contenir chacune les charges unitaires d'une des commandes. Ledit poste de préparation comprend :
- une position de prélèvement, unique et configurée pour permettre un prélèvement, dans une des charges sources, d'au moins une charge unitaire d'une des références conformément à une des lignes de commande ;
- une position d'insertion, unique et configurée permettre une insertion, dans une des charges d'expédition, de ladite au moins une charge unitaire prélevée ; et
- des moyens de recirculation, configurés pour permettre à certaines des charges d'expédition d'être placées plusieurs fois dans la position d'insertion.

Le système de préparation de commandes de la présente solution est donc configuré pour la mise en œuvre du procédé décrit plus haut : le poste de préparation est de type « 1 vers 1 » et comprend des moyens de recirculation.

Selon une caractéristique particulière, les moyens de recirculation comprennent :
- un convoyeur d'entrée de charges d'expédition, placé en amont de ladite position d'insertion ;
- un convoyeur de sortie de charges d'expédition, placé en aval de ladite position d'insertion ;
- un dispositif de blocage, configuré pour bloquer des charges d'expédition en amont d'un point d'attente du convoyeur d'entrée de charges d'expédition ; et
- un dispositif de transfert, configuré pour transférer, une par une, des charges d'expédition depuis un emplacement de départ situé sur le convoyeur de sortie de charges d'expédition vers un emplacement d'arrivée situé sur le convoyeur d'entrée de charges d'expédition, immédiatement en aval du point d'attente.

Ainsi, le poste de préparation de la présente solution nécessite des adaptations simples à mettre en œuvre et peu coûteuses par rapport à un poste de préparation classique de type « 1 vers 1 ».

Selon une caractéristique particulière, les moyens de recirculation forment une boucle de recirculation de Nₘₐₓ+1 ou Nₘₐₓ+2 emplacements, comprenant :
- des emplacements situés sur le convoyeur d'entrée de charges d'expédition, depuis l'emplacement d'arrivée, inclus, jusqu'à un emplacement précédant la position d'insertion ;
- la position d'insertion ; et
- des emplacements situés sur le convoyeur de sortie de charges d'expédition, depuis un emplacement suivant la position d'insertion jusqu'à l'emplacement de départ, inclus.

De cette façon, on minime les ressources nécessaires pour réaliser la boucle de recirculation.

Selon une caractéristique particulière, le convoyeur d'entrée de charges d'expédition et le convoyeur de sortie de charges d'expédition sont des convoyeurs rectilignes et accolés longitudinalement l'un à l'autre, l'emplacement de départ situé sur le convoyeur de sortie de charges d'expédition étant adjacent à l'emplacement d'arrivée.

Ainsi, le dispositif de transfert est simple à réaliser (table de transfert ou tout autre système équivalent).

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
La figure 1 présente une vue partielle d'un exemple de système de préparation de commandes selon un mode de réalisation particulier de l'invention.
La figure 2 présente un organigramme d'un procédé de traitement d'une liste de commandes selon un mode de réalisation particulier de l'invention.
La figure 3 illustre un exemple de création d'un groupe GP_1 de N commandes comprenant K lignes de commandes, par application des étapes 21 à 23 de la figure 2.
La figure 4 illustre un premier exemple d'application de l'étape 24 de la figure 2, avec la construction d'une liste LC₁ avec les K lignes de commandes du groupe GP_1 de la figure 3.
La figure 5 illustre un deuxième exemple d'application de l'étape 24 de la figure 2, avec la construction d'une liste LC₂ avec les K lignes de commandes du groupe GP_1 de la figure 3.
Les figures 6A à 6M présentent des étapes successives du pilotage du système de préparation de commandes de la figure 1 en fonction de la liste LC₁ de la figure 4.
La figure 7 présente la structure d'un système de pilotage selon un mode de réalisation particulier de l'invention.

### 6. DESCRIPTION DÉTAILLÉE

Sur toutes les figures du présent document, les éléments et étapes identiques sont désignés par une même référence numérique.

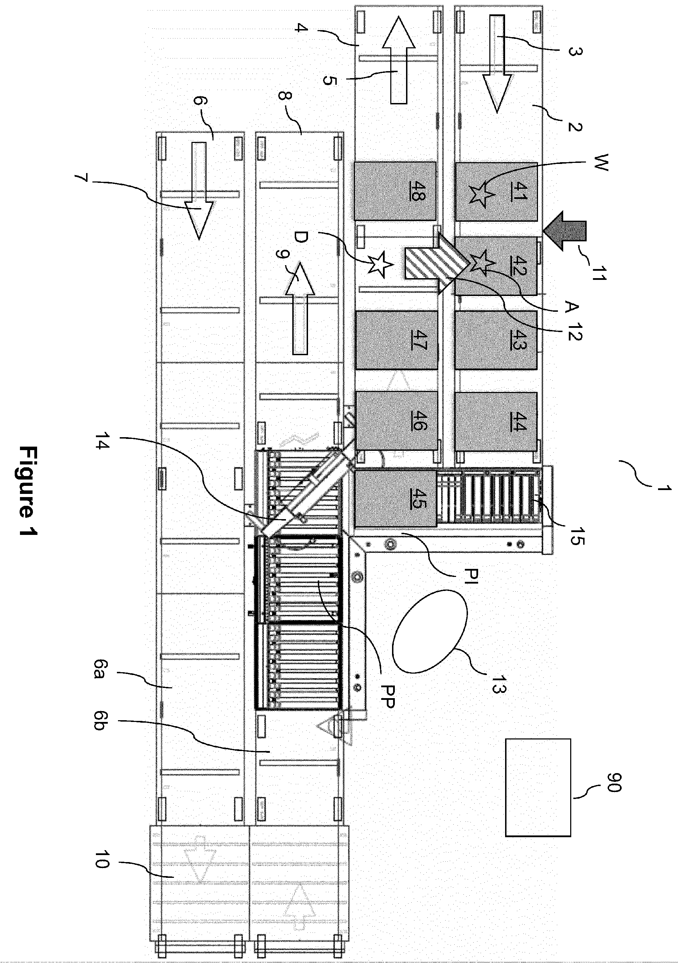

La figure **1** présente une vue partielle d'un exemple de système de préparation de commandes selon un mode de réalisation particulier de l'invention.

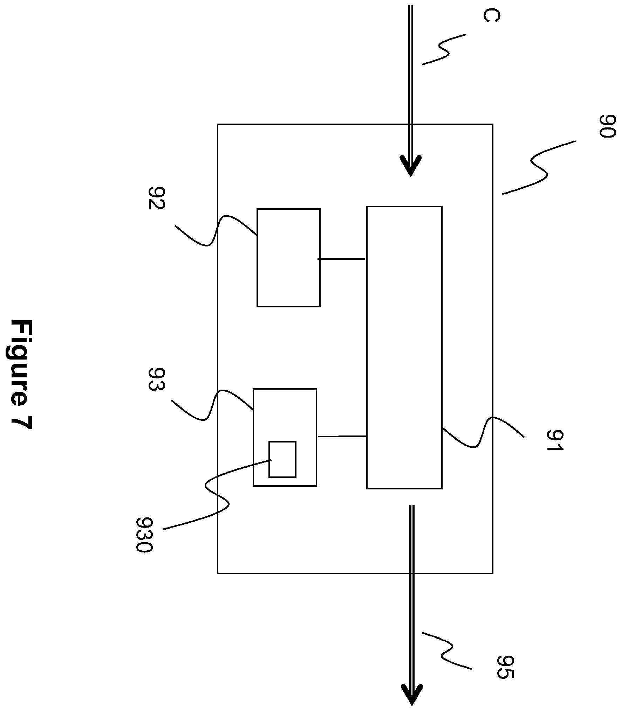

Le système de préparation de commandes comprend notamment un système de pilotage 90 (voir plus bas la description de la figure 7) et au moins un poste de préparation 1 recevant des charges sources et des charges d'expédition.

Le poste de préparation 1 comprend :
- une position de prélèvement PP, unique et configurée pour permettre un prélèvement par un opérateur (ou un robot) 13, dans une des charges sources, d'au moins une charge unitaire d'une des références conformément à une des lignes de commande ;
- une position d'insertion PI, unique et configurée permettre une insertion par l'opérateur (ou le robot) 13, dans une des charges d'expédition, de la ou les charges unitaires prélevées ;
- un dispositif d'affichage 14, fournissant à l'opérateur diverses informations (notamment, pour chaque ligne de commande, la référence et la quantité des charges unitaires à prélever) ;
- un convoyeur d'entrée de charges d'expédition 2, placé en amont de la position d'insertion PI et dont le sens d'avancement des charges qu'il porte (par exemple celles référencées 41 à 44) est symbolisé par la flèche référencée 3 ;
- un convoyeur de sortie de charges d'expédition 4, placé en aval de la position d'insertion PI et dont le sens d'avancement des charges qu'il porte (par exemple celles référencées 45 à 48) est symbolisé par la flèche référencée 5 ;
- un convoyeur d'entrée de charges sources 6, placé en amont de la position de prélèvement PP et dont le sens d'avancement des charges qu'il porte est symbolisé par la flèche référencée 7 ;
- un convoyeur de sortie de charges sources 8, placé en aval de la position de prélèvement PP et dont le sens d'avancement des charges qu'il porte est symbolisé par la flèche référencée 9 ;
- des moyens de recirculation, configurés pour permettre à certaines des charges d'expédition d'être placées plusieurs fois dans la position d'insertion.

Les moyens de recirculation comprennent, outre le convoyeur d'entrée de charges d'expédition 2 et le convoyeur de sortie de charges d'expédition 4 :
- un dispositif de blocage (symbolisé par la flèche référencée 11), configuré pour bloquer des charges d'expédition en amont d'un point d'attente (symbolisé par l'étoile référencée W) du convoyeur d'entrée de charges d'expédition 2 ; et
- un dispositif de transfert (symbolisé par la flèche référencée 12), configuré pour transférer, une par une, des charges d'expédition depuis un emplacement de départ (symbolisé par l'étoile référencée D) situé sur le convoyeur de sortie de charges d'expédition 4 vers un emplacement d'arrivée (symbolisé par l'étoile référencée A) situé sur le convoyeur d'entrée de charges d'expédition 2, immédiatement en aval du point d'attente W. C'est par exemple une table de transfert, ou tout autre dispositif équivalent.

Les moyens de recirculation forment une boucle de recirculation de Nₘₐₓ+1 ou Nmax+2 emplacements (le paramètre Nmax est détaillé par la suite), comprenant :
- des emplacements situés sur le convoyeur d'entrée de charges d'expédition 2, depuis l'emplacement d'arrivée A (inclus) jusqu'à un emplacement précédant la position d'insertion PI ;
- la position d'insertion PI ; et
- des emplacements situés sur le convoyeur de sortie de charges d'expédition 4, depuis un emplacement suivant la position d'insertion PI jusqu'à l'emplacement de départ D (inclus).

Dans l'exemple de la figure 1, la boucle de recirculation comprend sept emplacements (ce qui correspond au cas Nmax=6) : trois en amont de la position d'insertion PI (emplacements occupés par les charges référencées 42, 43 et 44), un qui correspond à la position d'insertion PI (emplacement occupé par la charge référencés 45) et trois en aval de la position d'insertion PI (deux emplacements occupés par les charges référencées 46 et 47 et un emplacement libre qui correspond à l'emplacement de départ D).

Dans le mode de réalisation particulier de la figure 1, le convoyeur d'entrée de charges d'expédition 2 et le convoyeur de sortie de charges d'expédition 4 sont des convoyeurs rectilignes et accolés longitudinalement l'un à l'autre (en d'autres termes, ils sont parallèles entre eux et adjacents sur un de leurs côtés longitudinaux). Des moyens de transfert 15 (table de transfert ou tout autre dispositif équivalent) sont configurés pour déplacer des charges sources d'un convoyeur rectiligne à l'autre. La position d'insertion PI correspond à la position occupée par une charge d'expédition, sur les moyens de transfert 15, avant de passer sur le convoyeur de sortie de charges d'expédition 4. L'emplacement de départ D est adjacent à l'emplacement d'arrivée A.

Dans le mode de réalisation particulier de la figure 1, le convoyeur d'entrée de charges sources 6 comprend deux brins (portions de convoyeur) rectilignes 6a et 6b accolés longitudinalement l'un à l'autre. En d'autres termes, les deux brins 6a et 6b sont parallèles entre eux et adjacents sur un de leurs côtés longitudinaux. Des moyens de transfert 10 (table de transfert ou tout autre dispositif équivalent) sont configurés pour déplacer des charges sources d'un brin à l'autre. Le convoyeur de sortie de charges sources 8 est un convoyeur rectiligne aligné (c'est-à-dire mis bout-à-bout) avec le deuxième brin 6b du convoyeur d'entrée de charges sources 6 et accolé longitudinalement au premier brin 6a du convoyeur d'entrée de charges sources 6. En d'autres termes, le convoyeur de sortie de charges sources 8 et le premier brin 6a du convoyeur d'entrée de charges sources 6 sont parallèles entre eux et adjacents sur un de leurs côtés longitudinaux. En résumé, l'ensemble formé par la mise bout-à-bout du convoyeur de sortie de charges sources 8 et du deuxième brin 6b est accolé longitudinalement au premier brin 6a.

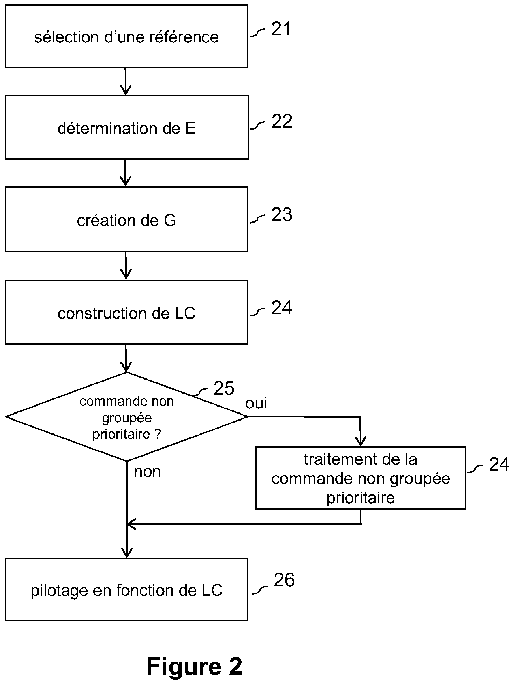

On présente maintenant, en relation avec la **figure 2****,** un procédé de traitement d'une liste de commandes C selon un mode de réalisation particulier de l'invention. Il est mis en œuvre par le système de pilotage 90.

Comme déjà mentionné plus haut, on suppose que chaque commande comprend une ou plusieurs lignes de commande et que chaque ligne de commande comprend un identifiant de commande, une référence de charge unitaire, une quantité de charges unitaire de ladite référence, et un niveau de priorité.

Dans une étape 21, le système de pilotage 90 sélectionne une référence présente dans le plus grand nombre de lignes de commandes parmi toutes les lignes de commande de la liste de commandes C.

Dans une étape 22, le système de pilotage 90 détermine un ensemble E de toutes les NE commandes contenant chacune une ligne de commande contenant la référence sélectionnée.

Dans une étape 23, le système de pilotage 90 crée un groupe G de N commandes qui sont soit les NE commandes, si N_{E}≤Nₘₐₓ avec Nmax un seuil prédéterminé, soit les Nmax premières commandes résultant d'un tri des NE commandes selon un ordre décroissant du niveau de priorité, si N_{E}>Nₘₐₓ.

Dans une étape 24, le système de pilotage 90 construit une liste LC de la totalité des K lignes de commande contenues dans les N commandes du groupe G, en respectant un jeu de règles comprenant les règles suivantes :
- Règle n°1 : si plusieurs des K lignes de commande contiennent une référence identique, elles se succèdent dans la liste LC sous la forme d'une sous-liste ;
- Règle n°2 : les N lignes de commande incluses dans la sous-liste correspondant à la référence sélectionnée contiennent N identifiants de commande différents dans un ordre donné ; et
- Règle n°3 : les lignes de commande non incluses dans la sous-liste correspondant à la référence sélectionnée contiennent des identifiants de commande, parmi les N identifiants de commande, dans un ordre cohérent avec l'ordre donné pris en boucle.

Dans une implémentation particulière, le jeu de règles comprend en outre une, plusieurs ou la totalité des règles qui suivent.
Règle n°4 : si au moins deux commandes du groupe G comprennent chacune des lignes de commandes dans au moins deux sous-listes, les lignes de commandes de ces au moins deux commandes suivent un même ordre de commande dans les au moins deux sous-listes.
Règle n°5 : si la liste LC comprend au moins deux sous-listes, celles-ci respectent entre elles un ordre décroissant du nombre de lignes de commande dans chaque sous-liste.
Règle n°6 : pour au moins une sous-liste, la dernière ligne de commande de cette sous-liste, qui se rapporte à une commande donnée, est suivie d'une ou plusieurs lignes de commande qui n'appartiennent à aucune sous-liste, qui se rapportent à la commande donnée et qui permettent de finaliser la commande donnée.
Règle n°7 en l'absence de contrainte de précédence, pour la sous-liste correspondant à la référence sélectionnée, entre les lignes de commande comprises dans la sous-liste et d'autres lignes de commande non comprises dans la sous-liste, l'ordre des lignes de commande de la sous-liste est calculé comme suit :
   - pour chaque ligne de commande de la sous-liste : détermination de la commande contenant la ligne de commande, calcul du nombre de sous-listes auxquelles appartiennent l'ensemble des lignes de commande de la commande déterminée, et association du nombre calculé à la ligne de commande ; et
   - tri des lignes de commande de la sous-liste selon un ordre décroissant du nombre associé à chaque ligne de commande de la sous-liste.
Règle n°8 : en l'absence de contrainte de précédence, pour la ou chaque sous-liste, entre les lignes de commande comprises dans la sous-liste et d'autres lignes de commande non comprises dans la sous-liste, la liste LC commence par la sous-liste comprenant le plus grand nombre de lignes de commande.

Dans une étape de test 25, le système de pilotage 90 détermine s'il existe au moins une commande non groupée prioritaire, c'est-à-dire une commande non comprise dans le groupe G et ayant un niveau de priorité supérieur au plus haut niveau de priorité des commandes du groupe G.

En cas de réponse négative à l'étape de test 25, le système de pilotage 90 passe à une étape 26 dans laquelle il pilote le système de préparation de commandes pour amener des charges sources à la position de prélèvement PP et des charges d'expédition à la position d'insertion PI, et faire recirculer localement (c'est-à-dire dans le poste de préparation) des charges d'expédition jusqu'à la position d'insertion PI, en fonction de la liste LC.

En cas de réponse positive à l'étape de test 25, le système de pilotage 90 passe à une étape 24 dans laquelle il traite la (ou les) commande(s) non groupée(s) prioritaire(s) puis il passe à l'étape 26 précitée.

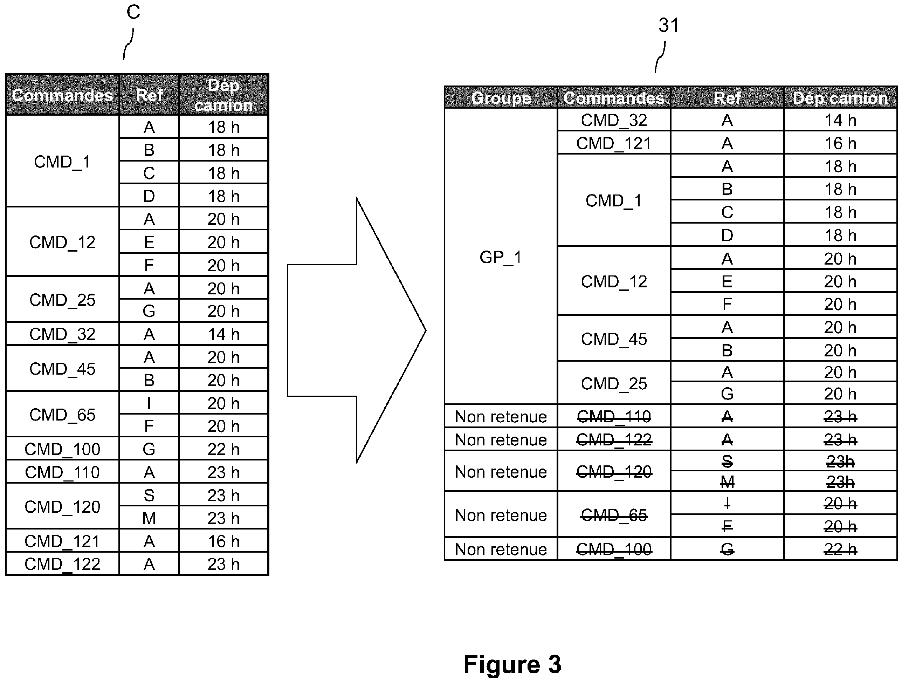

La **figure 3** illustre un exemple de création d'un groupe G (noté GP_1) de N commandes comprenant K lignes de commandes, par application des étapes 21 à 23 de la figure 2.

La partie gauche de la figure 3 représente, sous la forme d'un premier tableau, un exemple de liste de commandes C. Le premier tableau comprend trois colonnes :
- la première contient, pour chaque commande, un identifiant de commande ;
- la deuxième contient, pour chaque ligne de commande d'une commande donnée, une référence de charge unitaire ; et
- la troisième contient, pour chaque ligne de commande d'une commande donnée, un niveau de priorité. Dans cet exemple, le niveau de priorité est l'heure de départ du camion d'expédition dans lequel doit être transportée la charge d'expédition contenant les charges unitaires requises par la commande (c'est-à-dire la charge d'expédition dans laquelle sont placées les charges unitaires indiquées, en termes de référence et de quantité, dans les lignes de la commande).

Dans un seul souci de simplification, on n'a pas représenté sur la figure 3 une autre colonne contenant, pour chaque ligne de commande d'une commande donnée, une quantité de charges unitaires.

La liste de commandes C comprend onze commandes comprenant elles-mêmes (en total cumulé) vingt lignes de commande. Par exemple, la commande CMD_1 comprend quatre lignes de commande correspondant aux références de charge unitaire A, B, C et D respectivement, et elle possède le niveau de priorité « 18h » (comme chacune des lignes de commande qui la composent). La commande CMD_32 comprend une unique ligne de commande correspondant à la référence de charge unitaire A, et elle possède le niveau de priorité « 14h ». La commande CMD_32 a donc un niveau de priorité plus élevé que la commande CMD_1.

La partie droite de la figure 3 représente, sous la forme d'un deuxième tableau 31, un exemple d'un groupe GP_1 de N commandes, obtenu par application des étapes 21 à 23 de la figure 2. On suppose que Nmax=6. Le deuxième tableau comprend quatre colonnes :
- la première contient un identifiant du groupe créé (« GP_1 »), ou bien une indication « Non retenue » pour chaque commande non comprise dans le groupe créé ;
- la deuxième contient, pour chaque commande du groupe GP_1 ou chaque commande « Non retenue », un identifiant de commande ;
- la troisième contient, pour chaque ligne de commande d'une commande donnée, une référence de charge unitaire ; et
- la quatrième contient, pour chaque ligne de commande d'une commande donnée, un niveau de priorité.

Le groupe GP_1 comprend six commandes (CMD_32, CMD_121, CMD_1, CMD_12, CMD_45, CMD_25) comprenant elles-mêmes (en total cumulé) treize lignes de commande (K=13).

Résumé de l'application des étapes 21 à 23 de la figure 2 :
- étape 21: le système de pilotage 90 sélectionne la référence A car elle est présente dans huit lignes de commandes parmi les K lignes de commande de la liste de commandes C ;
- étape 22 : E = {CMD_1, CMD_12, CMD 25, CMD_32, CMD 45, CMD_110, CMD_45, CMD_110}, NE=8 ;
- étape 23 : N_{E}>Nₘₐₓ, donc le groupe GP_1 comprend six premières commandes (CMD_32, CMD_121, CMD_1, CMD_12, CMD_45, CMD_25) résultant d'un tri des NE=8 commandes selon un ordre décroissant du niveau de priorité.

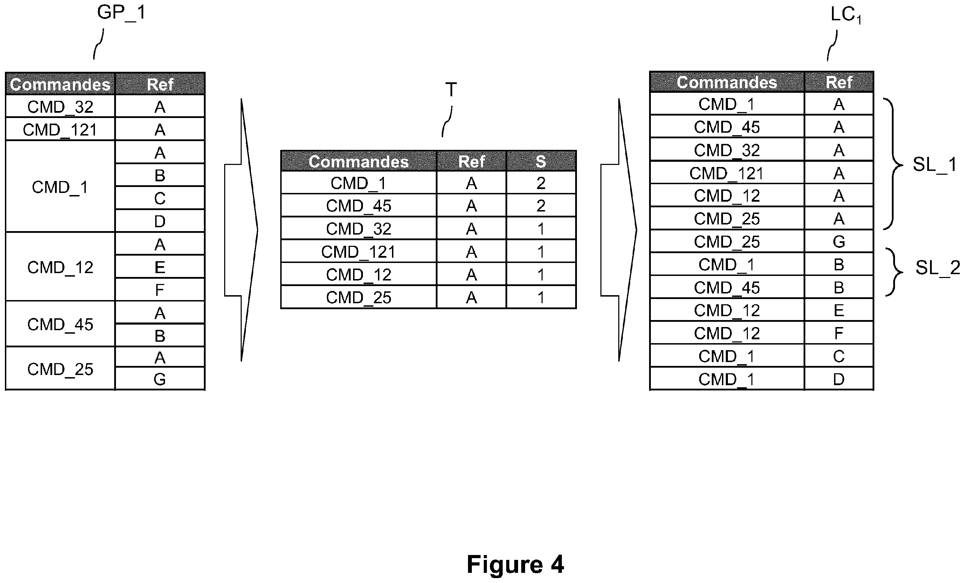

La **figure 4** illustre un premier exemple d'application de l'étape 24 de la figure 2, avec la construction d'une liste LC₁ avec les K lignes de commandes du groupe GP_1 de la figure 3.

La partie gauche de la figure 4 représente le groupe GP_1 (voir figure 3) et la partie droite de la figure 4 représente liste LC₁.

Application de la règle n°1 : la liste LC₁ comprend deux sous-listes SL_1 (lignes de commande contenant la référence A) et SL_2 (lignes de commande contenant la référence B).

Application de la règle n°2 : les six lignes de commande incluses dans la sous-liste SL_1 (correspondant à la référence sélectionnée A) contiennent six identifiants de commande différents dans un ordre donné : CMD_1, CMD_45, CMD_32, CMD_121, CMD_12, CMD_25 (voir règle n°7).

Application de la règle n°3 : les lignes de commande non incluses dans la sous-liste SL_1 contiennent des identifiants de commande dans l'ordre suivant : CMD 25, CMD_1, CMD_45, CMD_12, CMD_12, CMD_1, CMD_1), qui est un ordre cohérent avec l'ordre donné (voir application de la règle n°2) pris en boucle (c'est-à-dire après le dernier élément CMD_25 de l'ordre donné, on revient au premier élément CMD_1 de l'ordre donné).

Application de la règle n°4 : les commandes CMD_1 et CMD_45 comprennent chacune des lignes de commandes dans les sous-listes SL_1 et SL_2, donc les lignes de commandes de ces commandes CMD_1 et CMD_45 suivent un même ordre de commande dans les deux sous-listes SL_1 et SL_2.

Application de la règle n°5 : on suppose qu'il n'y a pas de contrainte de précédence, pour la sous-liste SL_1 (correspondant à la référence sélectionnée), entre les lignes de commande comprises dans la sous-liste SL_1 et d'autres lignes de commande non comprises dans la sous-liste SL_1. La liste LC₁ comprend deux sous-listes SL_1 et SL_2 qui respectent entre elles un ordre décroissant du nombre de lignes de commande dans chaque sous-liste (six dans SL_1, deux dans SL_2).

Application de la règle n°6 : pour la sous-liste SL_1, la dernière ligne de commande de cette sous-liste, qui se rapporte à la commande CMD_25, est suivie d'une ligne de commande qui n'appartient à aucune sous-liste (concerne la référence G), qui se rapporte à la commande CMD_25 et qui permet de finaliser la commande CMD_25.

Application de la règle n°7 : l'hypothèse ci-dessus d'absence de contrainte de précédence (voir l'application de la règle n°5) est conservée. Comme illustré par le tableau T de la partie centrale de la figure 4, l'ordre des lignes de commande de la sous-liste SL_1 (appelé « ordre donné » dans l'application de la règle n°2) est calculé comme suit :
- pour chaque ligne de commande de la sous-liste SL_1 : détermination de la commande contenant la ligne de commande, calcul du nombre S de sous-listes auxquelles appartiennent l'ensemble des lignes de commande de la commande déterminée, et association du nombre calculé à la ligne de commande ; et
- tri des lignes de commande de la sous-liste SL_1 (cf. partie droite de la figure 4) selon un ordre décroissant du nombre S associé à chaque ligne de commande de la sous-liste.

Application de la règle n°8 : l'hypothèse ci-dessus d'absence de contrainte de précédence (voir l'application de la règle n°5) étant conservée, la liste LC₁ commence par la sous-liste SL_1.

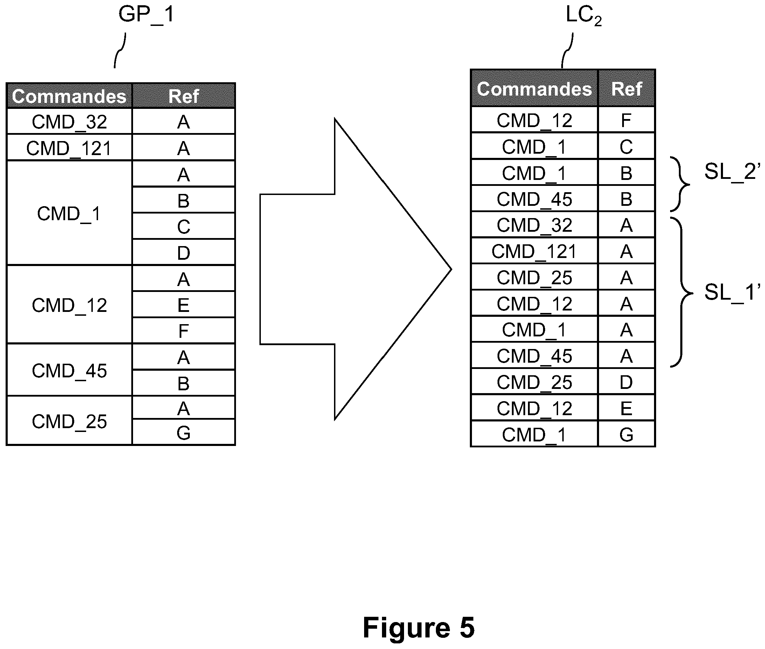

La **figure 5** illustre un deuxième exemple d'application de l'étape 24 de la figure 2, avec la construction d'une liste LC₂ avec les K lignes de commandes du groupe GP_1 de la figure 3.

La partie gauche de la figure 5 représente le groupe GP_1 (voir figure 3) et la partie droite de la figure 5 représente liste LC₂.

On suppose qu'il y a des contraintes de précédence, pour la sous-liste SL_1' (correspondant à la référence sélectionnée A), entre certaines lignes de commande de la sous-liste SL_1' et d'autres lignes de commande non comprises dans la sous-liste SL_1' :
- dans la commande CMD_1, les lignes de commande portant sur les références C et B doivent être traitées avant la ligne de commande portant sur la référence A ; et
- dans la commande CMD_12, la ligne de commande portant sur la référence F doit être traitée avant la ligne de commande portant sur la référence A.

Par conséquent, contrairement à l'exemple de la figure 4, les règles n°5, 7 et 8 ne s'appliquent pas.

Application de la règle n°1 : la liste LC₁ comprend deux sous-listes SL_1' (lignes de commande contenant la référence A) et SL_2' (lignes de commande contenant la référence B).

Application de la règle n°2 : les six lignes de commande incluses dans la sous-liste SL_1' (correspondant à la référence sélectionnée A) contiennent six identifiants de commande différents dans un ordre donné (différent de celui de la figure 4, du fait des contraintes à respecter) : CMD_32, CMD_121, CMD_25, CMD_12, CMD_1, CMD_45.

Application de la règle n°3 : les lignes de commande non incluses dans la sous-liste SL_1' contiennent des identifiants de commande dans les ordres suivants :
- avant la sous-liste SL_1' : CMD_12, CMD_1, CMD_1, CMD_45 ; et
- après la sous-liste SL_1' : CMD_25, CMD_12, CMD_1 ;
qui sont des ordres cohérents avec l'ordre donné (voir application de la règle n°2) pris en boucle (c'est-à-dire après le dernier élément CMD_45 de l'ordre donné, on revient au premier élément CMD_32 de l'ordre donné).

Application de la règle n°4 : les commandes CMD_1 et CMD_45 comprennent chacune des lignes de commandes dans les sous-listes SL_1' et SL_2', donc les lignes de commandes de ces commandes CMD_1 et CMD_45 suivent un même ordre de commande dans les deux sous-listes SL_1' et SL_2'.

Application de la règle n°6 : ne trouve pas à s'appliquer dans cet exemple.

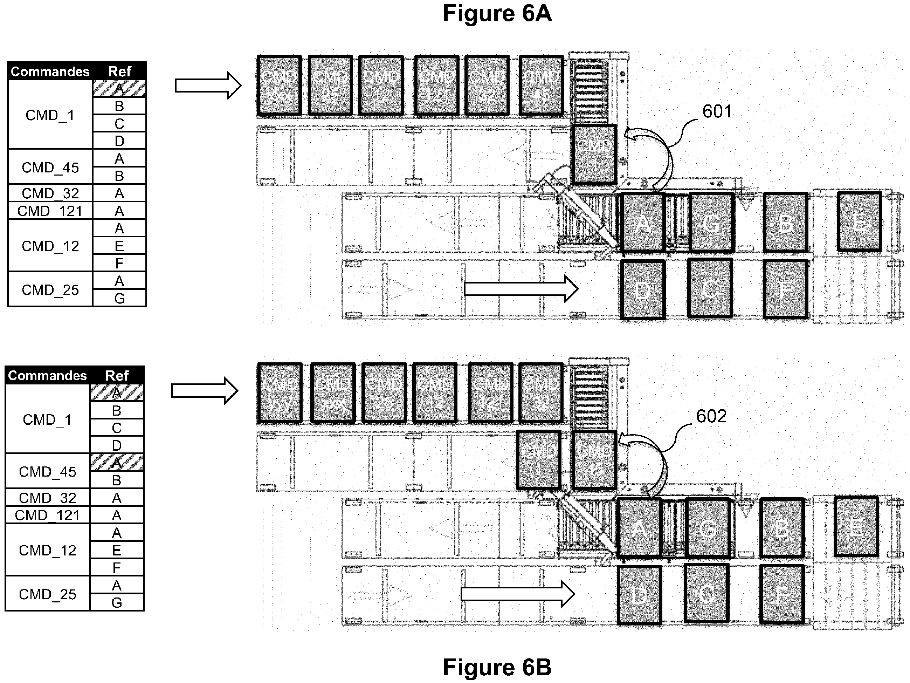

Les **figures 6A à 6M** présentent des étapes successives du pilotage du système de préparation de commandes de la figure 1 en fonction de la liste LC₁ de la figure 4.

Sur chacune des figures 6A à 6M, la partie gauche représente, en hachuré, les lignes de commande déjà traitées depuis le début du processus, et la partie droite représente les positions des charges sources et des charges d'expédition au sein du système de préparation de commande de la figure 1.

Dans un seul souci de clarté, chaque charge source est référencée par la référence des produits unitaires qu'elle contient. On a donc des charges sources référencées A, B, C, D, E, F et G. Il est clair cependant que la présente invention n'est pas limitée au cas où chaque contenant de stockage est associé à une unique référence de produit, mais s'applique également dans le cas où au moins certains des contenants de stockage sont associés chacun à plusieurs références de produits.

De même, chaque charge d'expédition est référencée par l'identifiant de la commande dont cette charge d'expédition vise à contenir les produits unitaires. On a donc des charges d'expédition référencées CMD_1, CMD_45, CMD_32, CMD_121, CMD_12 et CMD 25.

Sur la figure 6A, la flèche référencée 601 symbolise un prélèvement de charges unitaires dans la charge source A (positionnée à la position de prélèvement PP) et leur insertion dans la charge d'expédition CMD_1 (positionnée à la position d'insertion PI).

Sur la figure 6B, on voit que toutes les charges d'expédition ont avancé d'un emplacement. La flèche référencée 602 symbolise un prélèvement de charges unitaires dans la charge source A (positionnée à la position de prélèvement PP) et leur insertion dans la charge d'expédition CMD 45 (positionnée à la position d'insertion PI).

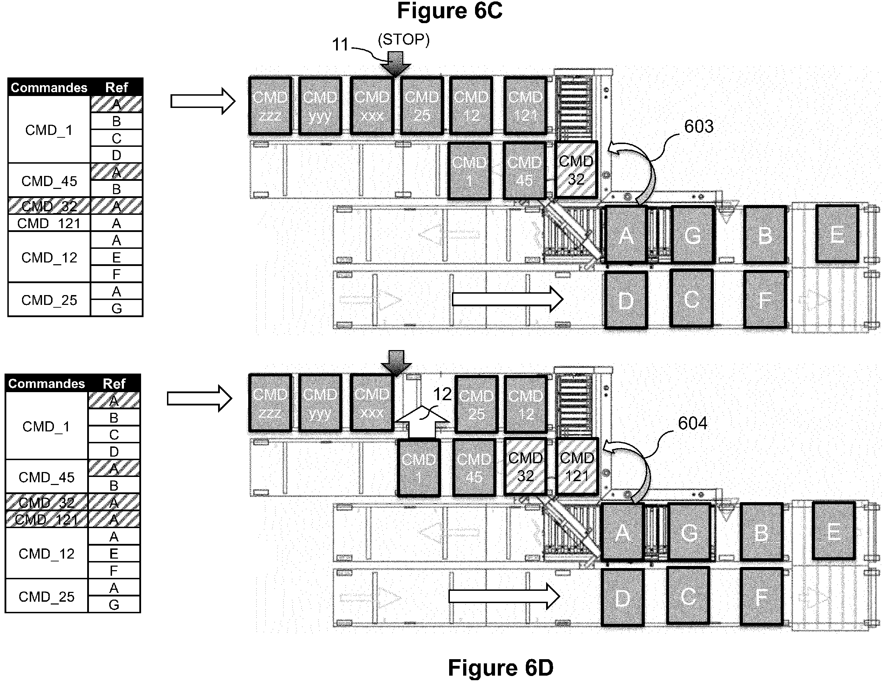

Sur la figure 6C, on voit que toutes les charges d'expédition ont avancé d'un emplacement. La flèche référencée 603 symbolise un prélèvement de charges unitaires dans la charge source A (positionnée à la position de prélèvement PP) et leur insertion dans la charge d'expédition CMD_32 (positionnée à la position d'insertion PI). La commande CMD_32 est terminée. Le dispositif de blocage (symbolisé par la flèche référencée 11) est actionné afin de bloquer (« STOP ») des charges d'expédition (CMD xxx, CMD-yyy, CMD_zzz) en amont du point d'attente A sur le convoyeur d'entrée de charges d'expédition 2.

Sur la figure 6D, on voit que toutes les charges d'expédition ont avancé d'un emplacement. La flèche référencée 604 symbolise un prélèvement de charges unitaires dans la charge source A (positionnée à la position de prélèvement PP) et leur insertion dans la charge d'expédition CMD_121 (positionnée à la position d'insertion PI). La commande CMD_121 est terminée. La charge d'expédition CMD_1 est recirculée localement (c'est-à-dire dans le poste de préparation), grâce au dispositif de transfert (symbolisé par la flèche référencée 12), depuis l'emplacement de départ D (situé sur le convoyeur de sortie de charges d'expédition 4) vers l'emplacement d'arrivée A (situé sur le convoyeur d'entrée de charges d'expédition 2).

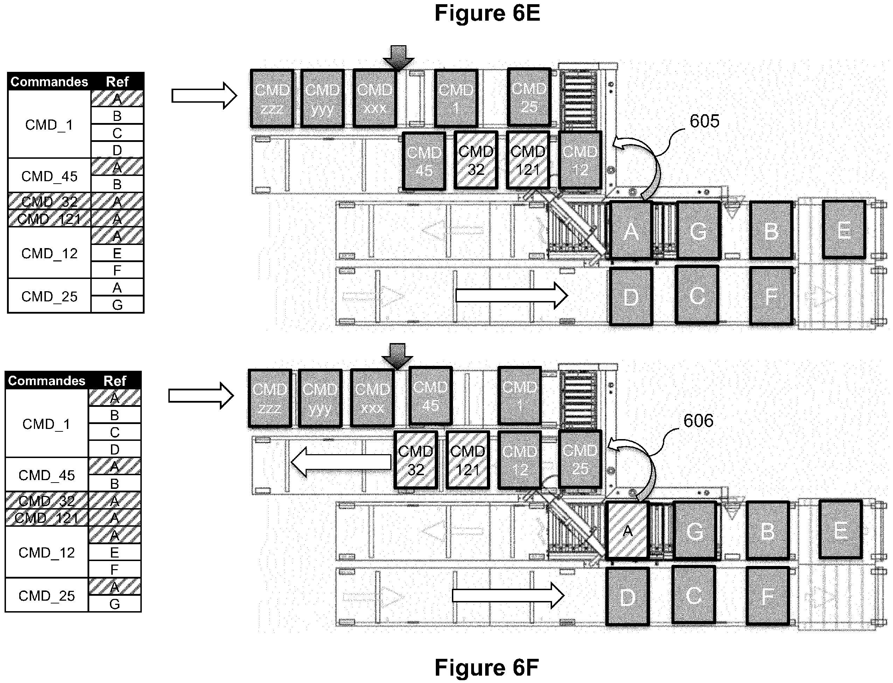

Sur la figure 6E, on voit que toutes les charges d'expédition ont avancé d'un emplacement. La flèche référencée 605 symbolise un prélèvement de charges unitaires dans la charge source A (positionnée à la position de prélèvement PP) et leur insertion dans la charge d'expédition CMD_12 (positionnée à la position d'insertion PI).

Sur la figure 6F, on voit que toutes les charges d'expédition ont avancé d'un emplacement. La flèche référencée 606 symbolise un prélèvement de charges unitaires dans la charge source A (positionnée à la position de prélèvement PP) et leur insertion dans la charge d'expédition CMD_25 (positionnée à la position d'insertion PI). Les charges d'expédition CMD_32 et CMD-121 sont évacuées (elles n'ont pas besoin d'être recirculées localement). La charge source A est évacuée.

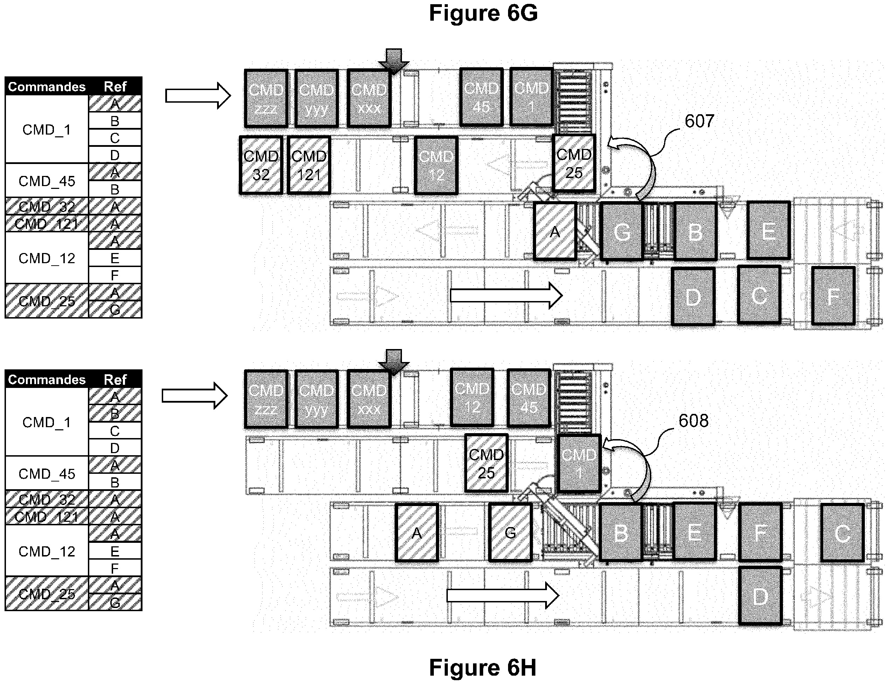

Sur la figure 6G, on voit que toutes les charges sources ont avancé d'un emplacement. La flèche référencée 607 symbolise un prélèvement de charges unitaires dans la charge source G (positionnée à la position de prélèvement PP) et leur insertion dans la charge d'expédition CMD 25 (positionnée à la position d'insertion PI). La commande CMD_25 est terminée. La charge source G est évacuée.

Sur la figure 6H, on voit que toutes les charges d'expédition ont avancé d'un emplacement, ainsi que toutes les charges sources. La charge d'expédition CMD_12 a été recirculée localement. La flèche référencée 608 symbolise un prélèvement de charges unitaires dans la charge source B (positionnée à la position de prélèvement PP) et leur insertion dans la charge d'expédition CMD_1 (positionnée à la position d'insertion PI).

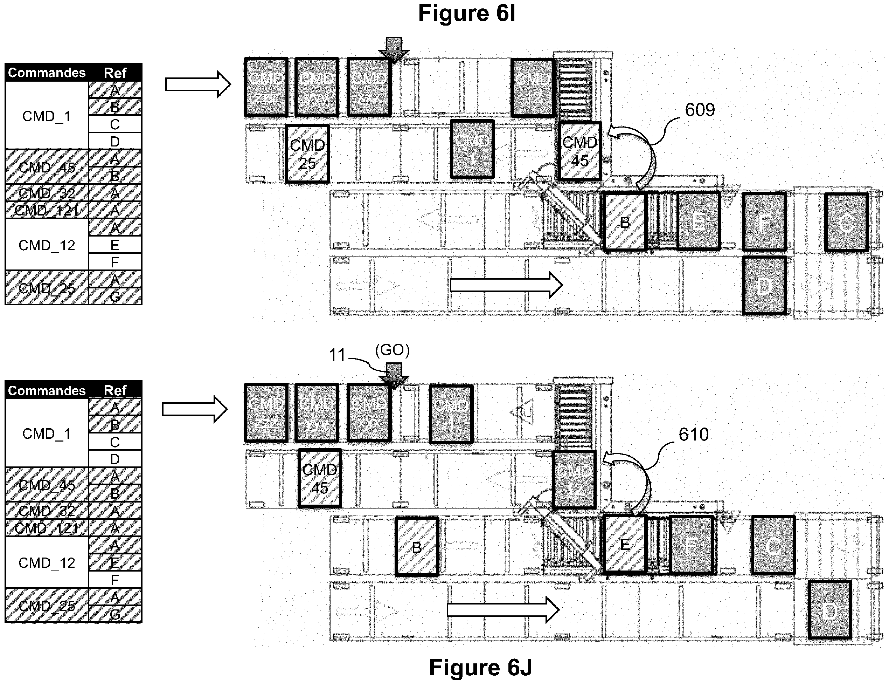

Sur la figure 6I, on voit que toutes les charges d'expédition ont avancé d'un emplacement. La flèche référencée 609 symbolise un prélèvement de charges unitaires dans la charge source B (positionnée à la position de prélèvement PP) et leur insertion dans la charge d'expédition CMD 45 (positionnée à la position d'insertion PI). La commande CMD_45 est terminée. La charge d'expédition CMD_25 est évacuée (elle n'a pas besoin d'être recirculée localement). La charge source B est évacuée.

Sur la figure 6J, on voit que toutes les charges d'expédition ont avancé d'un emplacement, ainsi que toutes les charges sources. La charge d'expédition CMD_1 a été recirculée localement. La flèche référencée 610 symbolise un prélèvement de charges unitaires dans la charge source E (positionnée à la position de prélèvement PP) et leur insertion dans la charge d'expédition CMD_12 (positionnée à la position d'insertion PI). La charge d'expédition CMD_45 est évacuée (elles n'a pas besoin d'être recirculée localement). La charge source E est évacuée. Le dispositif de blocage (symbolisé par la flèche référencée 11) est désactivé afin de laisser passer (« GO ») les charges d'expédition CMD xxx, CMD-yyy et CMD zzz (préalablement bloquées en amont du point d'attente A sur le convoyeur d'entrée de charges d'expédition 2).

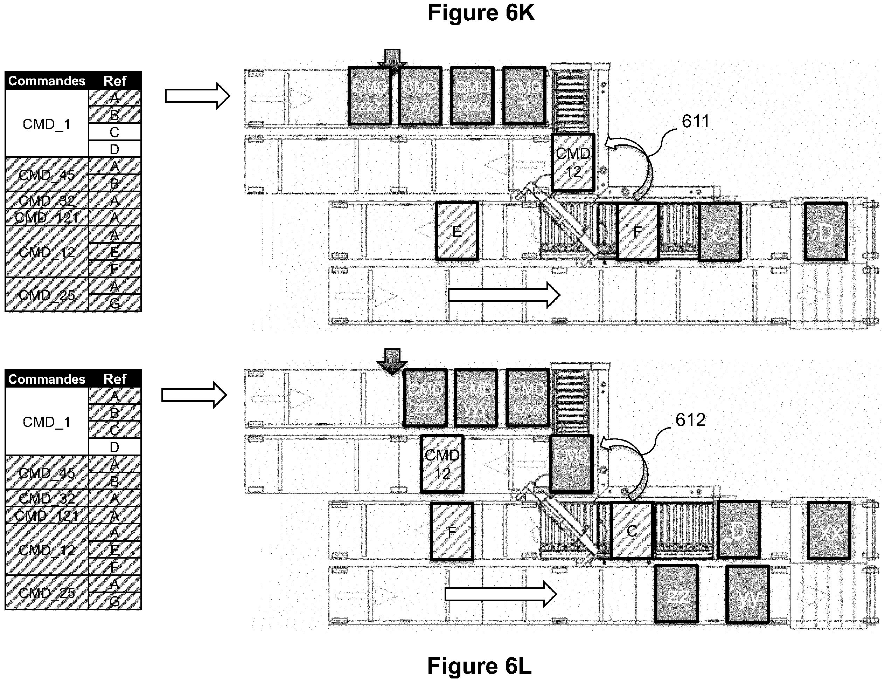

Sur la figure 6K, on voit que toutes les charges sources ont avancé d'un emplacement. La flèche référencée 611 symbolise un prélèvement de charges unitaires dans la charge source F (positionnée à la position de prélèvement PP) et leur insertion dans la charge d'expédition CMD_12 (positionnée à la position d'insertion PI). La charge source F est évacuée.

Sur la figure 6L, on voit que toutes les charges d'expédition ont avancé d'un emplacement, ainsi que toutes les charges sources. La flèche référencée 612 symbolise un prélèvement de charges unitaires dans la charge source C (positionnée à la position de prélèvement PP) et leur insertion dans la charge d'expédition CMD_1 (positionnée à la position d'insertion PI). La charge d'expédition CMD_12 est évacuée (elle n'a pas besoin d'être recirculée localement). La charge source C est évacuée.

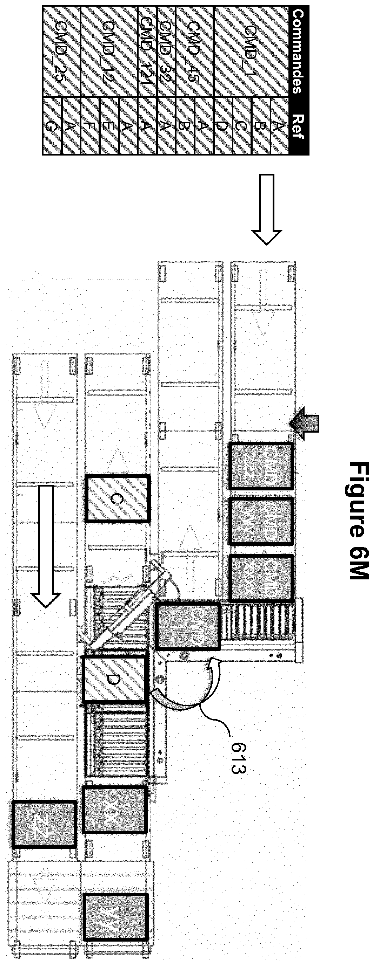

Sur la figure 6M, on voit que toutes les charges sources ont avancé d'un emplacement. La flèche référencée 613 symbolise un prélèvement de charges unitaires dans la charge source D (positionnée à la position de prélèvement PP) et leur insertion dans la charge d'expédition CMD_1 (positionnée à la position d'insertion PI). La commande CMD_1 est terminée. La charge source D est évacuée.

La **figure 7** présente la structure du système de pilotage 90 selon un mode de réalisation particulier de l'invention. Ce système de pilotage comprend une mémoire vive 92 (par exemple une mémoire RAM), une unité de traitement 91, équipée par exemple d'un processeur, et pilotée par un programme d'ordinateur 930 stocké dans une mémoire morte 93 (par exemple une mémoire ROM ou un disque dur).

A l'initialisation, les instructions de code du programme d'ordinateur sont par exemple chargées dans la mémoire vive 92 avant d'être exécutées par le processeur de l'unité de traitement 91, pour mettre en œuvre le procédé de séquencement de charges de l'invention (par exemple selon le mode de réalisation de la figure 3, dans l'une quelconque de ses mises en œuvre). L'unité de traitement 91 reçoit en entrée la liste de commandes C. Le processeur de l'unité de traitement 91 calcule la liste de lignes de commande LC (par exemple selon l'algorithme de la figure 2) et génère en sortie des instructions 95 permettant de piloter (commander) différents éléments (2, 4, 6, 8, 10, 11, 12, 15) compris dans le système de préparation de commande (notamment les différents éléments compris dans le poste de préparation 1, voir figure 1).

Cette figure 7 illustre seulement une manière particulière, parmi plusieurs possibles, de réaliser la technique de l'invention, dans l'un quelconque de ses modes de réalisation. En effet, le système de pilotage se réalise indifféremment sur une machine de calcul reprogrammable (par exemple un ordinateur PC, un processeur DSP, un microcontrôleur, etc.) exécutant un programme comprenant une séquence d'instructions, ou sur une machine de calcul dédiée (par exemple un ensemble de portes logiques comme un FPGA ou un ASIC, ou tout autre module matériel).

Dans le cas où le système de pilotage est réalisé avec une machine de calcul reprogrammable, le programme correspondant (c'est-à-dire la séquence d'instructions) peut être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de traitement d'une liste de commandes (C) dans un système de préparation de commandes, chaque commande comprenant une ou plusieurs lignes de commande, chaque ligne de commande comprenant un identifiant de commande, une référence et une quantité de charge unitaire, et un niveau de priorité, ledit système de préparation de commandes comprenant un système de pilotage (90) et au moins un poste de préparation (1) recevant des charges sources (A à G), contenant chacune des charges unitaires d'une ou plusieurs des références, et des charges d'expédition (41 à 48), destinées à contenir chacune les charges unitaires d'une des commandes, ledit au moins un poste de préparation comprenant :
- une position de prélèvement (PP), unique et configurée pour permettre un prélèvement, dans une des charges sources, d'au moins une charge unitaire d'une des références conformément à une des lignes de commande ;
- une position d'insertion (PI), unique et configurée permettre une insertion, dans une des charges d'expédition, de ladite au moins une charge unitaire prélevée ; et
- des moyens de recirculation (2, 4, 11, 12), configurés pour permettre à certaines des charges d'expédition d'être placées plusieurs fois dans la position d'insertion ; **caractérisé en ce que** le système de pilotage effectue les étapes suivantes :
- sélection (21) d'une référence présente dans le plus grand nombre de lignes de commandes parmi toutes les lignes de commande de ladite liste de commandes ;
- détermination (22) d'un ensemble E de toutes les N_{E} commandes contenant chacune une ligne de commande contenant ladite référence sélectionnée ;
- création (23) d'un groupe G de N commandes qui sont soit les N_{E} commandes, si N_{E}≤Nₘₐₓ avec Nmax un seuil prédéterminé, soit les Nmax premières commandes résultant d'un tri des N_{E} commandes selon un ordre décroissant du niveau de priorité, si N_{E}>Nₘₐₓ ;
- construction (24) d'une liste LC de la totalité des K lignes de commande contenues dans les N commandes du groupe G, en respectant les règles suivantes
* si plusieurs des K lignes de commande contiennent une référence identique, elles se succèdent dans la liste LC sous la forme d'une sous-liste ;
* les N lignes de commande incluses dans la sous-liste correspondant à ladite référence sélectionnée contiennent N identifiants de commande différents dans un ordre donné ; et
* les lignes de commande non incluses dans la sous-liste correspondant à la référence sélectionnée contiennent des identifiants de commande, parmi les N identifiants de commande, dans un ordre cohérent avec l'ordre donné pris en boucle ; et
- pilotage (26) du système de préparation de commandes pour amener des charges sources à la position de prélèvement et des charges d'expédition à la position d'insertion, et faire recirculer des charges d'expédition jusqu'à la position d'insertion, en fonction de la liste LC.

2. Procédé selon la revendication 1, **caractérisé en ce que** la construction de la liste LC est effectuée en respectant également la règle suivante : si au moins deux commandes du groupe G comprennent chacune des lignes de commandes dans au moins deux sous-listes, les lignes de commandes desdites au moins deux commandes suivent un même ordre de commande dans lesdites au moins deux sous-listes.

3. Procédé selon la revendication 1 ou 2, **caractérisé en ce que** la construction de la liste LC est effectuée en respectant également la règle suivante : en l'absence de contrainte de précédence, pour la sous-liste correspondant à la référence sélectionnée, entre les lignes de commande comprises dans ladite sous-liste et d'autres lignes de commande non comprises dans ladite sous-liste, si la liste LC comprend au moins deux sous-listes, lesdites au moins deux sous-listes respectent entre elles un ordre décroissant du nombre de lignes de commande dans chaque sous-liste.

4. Procédé selon l'une quelconque des revendications 1 à 3, **caractérisé en ce que** la construction de la liste LC est effectuée en respectant également la règle suivante : pour au moins une sous-liste, la dernière ligne de commande de ladite sous-liste, qui se rapporte à une commande donnée, est suivie d'une ou plusieurs lignes de commande n'appartenant à aucune sous-liste, se rapportant à ladite commande donnée et permettant de finaliser ladite commande donnée.

5. Procédé selon l'une quelconque des revendications 1 à 4, **caractérisé en ce que** la construction de la liste LC est effectuée en respectant également la règle suivante : en l'absence de contrainte de précédence, pour la sous-liste correspondant à la référence sélectionnée, entre les lignes de commande comprises dans ladite sous-liste et d'autres lignes de commande non comprises dans ladite sous-liste, l'ordre des lignes de commande de ladite sous-liste est calculé comme suit :
- pour chaque ligne de commande de ladite sous-liste : détermination de la commande contenant ladite ligne de commande, calcul du nombre de sous-listes auxquelles appartiennent l'ensemble des lignes de commande de la commande déterminée, et association du nombre calculé à ladite ligne de commande ; et
- tri des lignes de commande de ladite sous-liste selon un ordre décroissant du nombre associé à chaque ligne de commande de ladite sous-liste.

6. Procédé selon l'une quelconque des revendications 1 à 5, **caractérisé en ce que** la construction de la liste LC est effectuée en respectant également la règle suivante : en l'absence de contrainte de précédence, pour la ou chaque sous-liste, entre les lignes de commande comprises dans ladite sous-liste et d'autres lignes de commande non comprises dans ladite sous-liste, la liste LC commence par la sous-liste comprenant le plus grand nombre de lignes de commande.

7. Procédé selon l'une quelconque des revendications 1 à 6, **caractérisé en ce que**, si après la création du groupe G il existe au moins une commande non groupée prioritaire, non comprise dans le groupe G et ayant un niveau de priorité supérieur au plus haut niveau de priorité des commandes du groupe G, le système de pilotage traite (24) ladite au moins une commande non groupée prioritaire avant l'étape de pilotage (26) du système de préparation de commandes en fonction de la liste LC.

8. Système de préparation de commandes, configuré pour traiter une liste de commandes (C), chaque commande comprenant une ou plusieurs lignes de commande, chaque ligne de commande comprenant un identifiant de commande, une référence et une quantité de charge unitaire, et un niveau de priorité, ledit système de préparation de commandes étant **caractérisé en ce qu'**il comprend :
- un système de pilotage (90), configuré pour mettre en œuvre le procédé selon l'une quelconque des revendications 1 à 7, et
- au moins un poste de préparation (1) recevant des charges sources, contenant chacune des charges unitaires d'une ou plusieurs des références, et des charges d'expédition, destinées à contenir chacune les charges unitaires d'une des commandes, ledit poste de préparation comprenant :
* une position de prélèvement (PP), unique et configurée pour permettre un prélèvement, dans une des charges sources, d'au moins une charge unitaire d'une des références conformément à une des lignes de commande ;
* une position d'insertion (PI), unique et configurée permettre une insertion, dans une des charges d'expédition, de ladite au moins une charge unitaire prélevée ; et
* des moyens de recirculation (2, 4, 11 ,12), configurés pour permettre à certaines des charges d'expédition d'être placées plusieurs fois dans la position d'insertion.

9. Système de préparation de commandes selon la revendication 8, **caractérisé en ce que** les moyens de recirculation comprennent :
- un convoyeur d'entrée de charges d'expédition (2), placé en amont de ladite position d'insertion (PI) ;
- un convoyeur de sortie de charges d'expédition (4), placé en aval de ladite position d'insertion (PI) ;
- un dispositif de blocage (11), configuré pour bloquer des charges d'expédition en amont d'un point d'attente (W) du convoyeur d'entrée de charges d'expédition ; et
- un dispositif de transfert (12), configuré pour transférer, une par une, des charges d'expédition depuis un emplacement de départ (D) situé sur le convoyeur de sortie de charges d'expédition (4) vers un emplacement d'arrivée (A) situé sur le convoyeur d'entrée de charges d'expédition (2), immédiatement en aval du point d'attente (W).

10. Système de préparation de commandes selon la revendication 9, **caractérisé en ce que** les moyens de recirculation forment une boucle de recirculation de Nₘₐₓ+1 ou Nₘₐₓ+2 emplacements, comprenant :
- des emplacements situés sur le convoyeur d'entrée de charges d'expédition (2), depuis l'emplacement d'arrivée (A), inclus, jusqu'à un emplacement précédant la position d'insertion (PI) ;
- la position d'insertion (PI) ; et
- des emplacements situés sur le convoyeur de sortie de charges d'expédition (4), depuis un emplacement suivant la position d'insertion (PI) jusqu'à l'emplacement de départ (D), inclus.

11. Système de préparation de commandes selon la revendication 10, **caractérisé en ce que** le convoyeur d'entrée de charges d'expédition (2) et le convoyeur de sortie de charges d'expédition (4) sont des convoyeurs rectilignes et accolés longitudinalement l'un à l'autre, l'emplacement de départ (D) situé sur le convoyeur de sortie de charges d'expédition (4) étant adjacent à l'emplacement d'arrivée (A).

## Patentansprüche

1. Verfahren zur Verarbeitung einer Bestellliste (C) in einem Kommissioniersystem, wobei jede Bestellung eine oder mehrere Bestellzeilen umfasst, wobei jede Bestellzeile eine Bestellkennung, eine Einzellastartikelnummer und -menge umfasst, und eine Prioritätsstufe, wobei das Kommissioniersystem ein Steuerungssystem (90) umfasst und mindestens eine Kommissionierstation (1), die Quelllasten (A bis G) erhält, die jeweils Einzellasten einer oder mehrerer der Artikelnummern enthalten, und Versandlasten (41 bis 48), die dazu bestimmt sind, jede der Einzellasten einer der Bestellungen zu enthalten, wobei die mindestens eine Kommissionierstation umfasst:
- eine einzige Entnahmeposition (PP), die dazu ausgestaltet ist, eine Entnahme, aus einer der Quelllasten, mindestens einer Einzellast einer der Artikelnummern entsprechend einer der Bestellzeilen zu ermöglichen;
- eine einzige Einsetzposition (PI), die dazu ausgestaltet ist, ein Einsetzen, in eine der Versandlasten, der mindestens einen entnommenen Einzellast zu ermöglichen; und
- Rezirkulationsmittel (2, 4, 11, 12), die dazu ausgestaltet sind, einigen der Versandlasten zu ermöglichen, mehrmals in der Einsetzposition angeordnet zu werden;
**dadurch gekennzeichnet, dass** das Steuerungssystem die folgenden Schritte ausführt:
- Auswählen (21) einer Artikelnummer, die in der größten Anzahl von Bestellzeilen unter allen Bestellzeilen der Bestellliste vorkommt;
- Bestimmen (22) einer Menge E aller N_{E} Bestellungen, die jeweils eine Bestellzeile enthalten, die die ausgewählte Artikelnummer enthält;
- Erstellen (23) einer Gruppe G mit N Bestellungen, die entweder die N_{E} Bestellungen sind, wenn N_{E}≤Nₘₐₓ, wobei Nₘₐₓ ein vorbestimmter Schwellenwert ist, oder die Nₘₐₓ ersten Bestellungen, die aus einer Sortierung der N_{E} Bestellungen gemäß einer absteigenden Reihenfolge der Prioritätsstufe resultieren, wenn N_{E}>Nₘₐₓ;
- Aufbauen (24) einer Liste LC mit der Gesamtheit der K Bestellzeilen, die in den N Bestellungen der Gruppe G enthalten sind, unter Beachtung der folgenden Regeln
* wenn mehrere der K Bestellzeilen eine identische Artikelnummer enthalten, folgen sie in der Liste LC in Form einer Teilliste aufeinander;
* die in die Teilliste aufgenommenen N Bestellzeilen, die der ausgewählten Artikelnummer entsprechen, enthalten N unterschiedliche Bestellkennungen in einer gegebenen Reihenfolge; und
* die nicht in die Teilliste aufgenommenen Bestellzeilen, die der ausgewählten Artikelnummer entsprechen, enthalten Bestellkennungen, unter den N Bestellkennungen, in einer Reihenfolge, die mit der in Schleife genommenen gegebenen Reihenfolge übereinstimmt; und
- Steuern (26) des Kommissioniersystems, um Quelllasten zur Entnahmeposition und Versandlasten zur Einsetzführposition zu bringen und Versandlasten bis zur Einsetzposition rezirkulieren zu lassen, in Abhängigkeit von der Liste LC.

2. Verfahren nach Anspruch 1, **dadurch gekennzeichnet, dass** das Aufbauen der Liste LC unter Beachtung auch der folgenden Regel erfolgt: Wenn mindestens zwei Bestellungen der Gruppe G jeweils Bestellzeilen in mindestens zwei Teillisten umfassen, folgen die Bestellzeilen der mindestens zwei Bestellungen der gleichen Bestellreihenfolge in den mindestens zwei Teillisten.

3. Verfahren nach Anspruch 1 oder 2, **dadurch gekennzeichnet, dass** das Aufbauen der Liste LC unter Beachtung auch der folgenden Regel erfolgt: Bei Nichtvorliegen einer Präzedenzbedingung beachten, für die der ausgewählten Artikelnummer entsprechenden Teilliste, unter den in der Teilliste inbegriffenen Bestellzeilen und anderen nicht in der Teilliste inbegriffenen Bestellzeilen, wenn die Liste LC mindestens zwei Teillisten umfasst, die mindestens zwei Teillisten untereinander eine absteigende Reihenfolge der Anzahl von Bestellzeilen in jeder Teilliste.

4. Verfahren nach einem der Ansprüche 1 bis 3, **dadurch gekennzeichnet, dass** das Aufbauen der Liste LC unter Beachtung auch der folgenden Regel erfolgt: Für mindestens eine Teilliste wird die letzte Bestellzeile der Teilliste, die sich auf eine gegebene Bestellung bezieht, von einer oder mehreren Bestellzeilen gefolgt, die zu keiner Teilliste gehören, sich auf die gegebene Bestellung beziehen und es ermöglichen, die gegebene Bestellung abzuschließen.

5. Verfahren nach einem der Ansprüche 1 bis 4, **dadurch gekennzeichnet, dass** das Aufbauen der Liste LC unter Beachtung auch der folgenden Regel erfolgt: Bei Nichtvorliegen einer Präzedenzbedingung wird, für die der ausgewählten Artikelnummer entsprechenden Teilliste, unter den in der Teilliste inbegriffenen Bestellzeilen und anderen nicht in der Teilliste inbegriffenen Bestellzeilen, die Reihenfolge der Bestellzeilen der Teilliste wie folgt berechnet:
- für jede Bestellzeile der Teilliste: Bestimmen der Bestellung, die die Bestellzeile enthält, Berechnen der Anzahl von Teillisten, zu denen sämtliche Bestellzeilen der bestimmten Bestellung gehören, und Zuweisen der berechneten Anzahl zu der Bestellzeile; und
- Sortieren der Bestellzeilen der Teilliste gemäß einer absteigenden Reihenfolge der Anzahl, die jeder Bestellzeile der Teilliste zugewiesen ist.

6. Verfahren nach einem der Ansprüche 1 bis 5, **dadurch gekennzeichnet, dass** das Aufbauen der Liste LC unter Beachtung auch der folgenden Regel erfolgt: Bei Nichtvorliegen einer Präzedenzbedingung beginnt, für die oder jede Teilliste, unter den in der Teilliste inbegriffenen Bestellzeilen und anderen nicht in der Teilliste inbegriffenen Bestellzeilen, die Liste LC mit der Teilliste, die die größte Anzahl von Bestellzeilen umfasst.

7. Verfahren nach einem der Ansprüche 1 bis 6, **dadurch gekennzeichnet, dass**, wenn nach dem Erstellen der Gruppe G mindestens eine prioritäre nicht gruppierte Bestellung vorliegt, die nicht in der Gruppe G inbegriffen ist und eine Prioritätsstufe über der höchsten Prioritätsstufe der Bestellungen der Gruppe G hat, das Steuerungssystem die mindestens eine prioritäre nicht gruppierte Bestellung vor dem Steuerungsschritt (26) des Kommissioniersystems in Abhängigkeit von der Liste LC verarbeitet (24).

8. Kommissioniersystem, das dazu ausgestaltet ist, eine Bestellliste (C) zu verarbeiten, wobei jede Bestellung eine oder mehrere Bestellzeilen umfasst, wobei jede Bestellzeile eine Bestellkennung, eine Einzellastartikelnummer und -menge umfasst, und eine Prioritätsstufe, wobei das Kommissioniersystem **dadurch gekennzeichnet ist, dass** es umfasst:
- ein Steuerungssystem (90), das dazu ausgestaltet ist, das Verfahren nach einem der Ansprüche 1 bis 7 umzusetzen, und
- mindestens eine Kommissionierstation (1), die Quelllasten erhält, die jeweils Einzellasten eines oder mehrerer der Artikelnummern enthalten, und Versandlasten, die dazu bestimmt sind, jeweils die Einzellasten einer der Bestellungen zu enthalten, wobei die Kommissionierstation umfasst:
* eine einzige Entnahmeposition (PP), die dazu ausgestaltet ist, eine Entnahme, aus einer der Quelllasten, mindestens einer Einzellast einer der Artikelnummern entsprechend einer der Bestellzeilen zu ermöglichen;
* eine einzige Einsetzposition (PI), die dazu ausgestaltet ist, ein Einsetzen, in eine der Versandlasten, der mindestens einen entnommenen Einzellast zu ermöglichen; und
* Rezirkulationsmittel (2, 4, 11, 12), die dazu ausgestaltet sind, einigen der Versandlasten zu ermöglichen, mehrmals in der Einsetzposition angeordnet zu werden.

9. Kommissioniersystem nach Anspruch 8, **dadurch gekennzeichnet, dass** die Rezirkulationsmittel umfassen:
- einen Versandlasten-Zuförderer (2) der stromauf der Einsetzposition (PI) angeordnet ist;
- einen Versandlasten-Wegförderer (4), der stromab der Einsetzposition (PI) angeordnet ist;
- eine Blockiervorrichtung (11), die dazu ausgestaltet ist, Versandlasten stromauf eines Wartepunkts (W) des Versandlasten-Zuförderers zu blockieren; und
- eine Übergabevorrichtung (12), die dazu ausgestaltet ist, Versandlasten einzeln von einem auf dem Versandlasten-Wegförderer (4) gelegenen Abgangsplatz (D) an einen auf dem Versandlasten-Zuförderer (2) gelegenen Zugangsplatz (A), unmittelbar stromab des Wartepunkts (W), zu übergeben.

10. Kommissioniersystem nach Anspruch 9, **dadurch gekennzeichnet, dass** die Rezirkulationsmittel eine Rezirkulationsschleife mit Nₘₐₓ+1 ODER Nₘₐₓ+2 Plätzen bilden, umfassend:
- auf dem Versandlasten-Zuförderer (2) gelegene Plätze, vom Zugangsplatz (A), einschließlich, bis zu einem der Einsetzposition (PI) vorausgehenden Platz;
- die Einsetzposition (PI); und
- auf dem Versandlasten-Wegförderer (4) gelegene Plätze, von einem auf die Einsetzposition (PI) folgenden Position bis zum Abgangsplatz (D), einschließlich.

11. Kommissioniersystem nach Anspruch 10, **dadurch gekennzeichnet, dass** der Versandlasten-Zuförderer (2) und der Versandlasten-Wegförderer (4) geradlinige und in Längsrichtung aneinander liegende Förderer sind, wobei der auf dem Versandlasten-Wegförderer (4) gelegene Abgangsplatz (D) benachbart zum Zugangsplatz (A) ist.

## Claims

1. A method for processing a list of orders (C) in a system for preparation of orders, each order comprising one or more order lines, each order line comprising an order identifier, a reference and a unit load quantity, and a priority level, said system for preparation of orders comprising a control system (90) and at least one preparation station (1) receiving source loads (A to G), each containing unit loads of one or more of the references, and shipping loads (41 to 48), each intended to contain the unit loads of one of the orders, said at least one preparation station comprising:
- a sampling position (PP), which is unique and configured to allow sampling, in one of the source loads, of at least one unit load of one of the references in accordance with one of the order lines;
- an insertion position (PI), which is unique and configured to allow insertion, in one of the shipping loads, of said at least one sampled unit load; and
- recirculation means (2, 4, 11, 12), configured to allow some of the shipping loads to be placed several times in the insertion position; **characterised in that** the control system performs the following steps:
- selecting (21) a reference present in the largest number of order lines among all the order lines of said list of orders;
- determining (22) a set E of all N_{E} orders each containing an order line containing said selected reference;
- creating (23) a group G of N orders which are either the N_{E} orders, if N_{E}≤Nₘₐₓ with Nₘₐₓ a predetermined threshold, or the first Nₘₐₓ orders resulting from a sorting of the N_{E} orders in decreasing sequence of the level of priority, if N_{E}>Nₘₐₓ;
- constructing (24) a list LC of all the K order lines contained in the N orders of the group G, while respecting the following rules
- if several of the K order lines contain an identical reference, they follow one another in the list LC in the form of a sub-list;
- the N order lines included in the sub-list corresponding to said selected reference contain N different order identifiers in a given sequence; and
- the order lines not included in the sub-list corresponding to the selected reference contain order identifiers, among the N order identifiers, in a sequence consistent with the given sequence taken in a loop; and
- controlling (26) system for preparation of orders to bring source loads to the sampling position and shipping loads to the insertion position, and recirculate shipping loads to the insertion position, according to the list LC.

2. The method according to claim 1, **characterised in that** the construction of the list LC is carried out while also respecting the following rule: if at least two orders of the group G each comprise order lines in at least two sub-lists, the order lines of said at least two orders follow the same sequence of orders in said at least two sub-lists.

3. The method according to claim 1 or 2, **characterised in that** the construction of the list LC is carried out while also respecting the following rule: in the absence of precedence constraint, for the sub-list corresponding to the selected reference, between the order lines comprised in said sub-list and other order lines not comprised in said sub-list, if the list LC comprises at least two sub-lists, said at least two sub-lists together respect a decreasing sequence of the number of order lines in each sub-list.

4. The method according to any one of claims 1 to 3, **characterised in that** the construction of the list LC is carried out while also respecting the following rule: for at least one sub-list, the last order line of said sub-list, which relates to a given order, is followed by one or more order lines not belonging to any sub-list, relating to said given order and allowing to finalise said given order.

5. The method according to any one of claims 1 to 4, **characterised in that** the construction of the list LC is carried out while also respecting the following rule: in the absence of precedence constraint, for the sub-list corresponding to the reference selected, between the order lines comprised in said sub-list and other order lines not comprised in said sub-list, the sequence of order lines of said sub-list is calculated as follows:
- for each order line of said sub-list: determining the order containing said order line, calculating the number of sub-lists to which all the order lines of the determined order belong, and associating the calculated number with said order line; and
- sorting the order lines of said sub-list in decreasing sequence of the number associated with each order line of said sub-list.

6. The method according to any one of claims 1 to 5, **characterised in that** the construction of the list LC is carried out while also respecting the following rule: in the absence of a precedence constraint, for the or each sub-list, between the order lines comprised in said sub-list and other order lines not comprised in said sub-list, the list LC begins with the sub-list comprising the greatest number of order lines.

7. The method according to any one of claims 1 to 6, **characterised in that**, if after the creation of the group G there is at least one priority non-grouped order, not comprised in the group G and having a priority level greater than the highest priority level of the orders of the group G, the control system processes (24) said at least one priority non-grouped order before the step of controlling (26) the system for preparation of orders according to the list LC.

8. A system for preparation of orders, configured to process a list of orders (C), each order comprising one or more order lines, each order line comprising an order identifier, a reference and a unit load quantity, and a priority level, said system for preparation of orders being **characterised in that** it comprises:
- a control system (90), configured to implement the method according to any one of claims 1 to 7, and
- at least one preparation station (1) receiving source loads, each containing unit loads of one or more of the references, and shipping loads, each intended to contain the unit loads of one of the orders, said preparation station comprising:
- a sampling position (PP), which is unique and configured to allow sampling, in one of the source loads, of at least one unit load of one of the references in accordance with one of the order lines;
- an insertion position (PI), which is unique and configured to allow insertion, in one of the shipping loads, of said at least one sampled unit load; and
- recirculation means (2, 4, 11, 12), configured to allow some of the shipping loads to be placed several times in the insertion position.

9. The system for preparation of orders according to claim 8, **characterised in that** the recirculation means comprise:
- a shipping load input conveyor (2), placed upstream of said insertion position (PI);
- a shipping load output conveyor (4), placed downstream of said insertion position (PI);
- a blocking device (11), configured to block shipping loads upstream of a holding point (W) of the shipping load input conveyor; and
- a transfer device (12), configured to transfer, one by one, shipping loads from a starting location (D) located on the shipping load output conveyor (4) to an arrival location (A) located on the shipping load input conveyor (2), immediately downstream of the holding point (W).

10. The system for preparation of orders according to claim 9, **characterised in that** the recirculation means form a recirculation loop of Nₘₐₓ+1 or Nₘₐₓ+2 locations, comprising:
- locations located on the shipping load input conveyor (2), from the arrival location (A), inclusive, to a location preceding the insertion position (PI);
- the insertion position (PI); and
- locations located on the shipping load output conveyor (4), from a location following the insertion position (PI) to the starting location (D), inclusive.

11. The system for preparation of orders according to claim 10, **characterised in that** the shipping load input conveyor (2) and the shipping load output conveyor (4) are rectilinear conveyors and longitudinally contiguous to each other, the start location (D) on the shipping load output conveyor (4) being adjacent to the arrival location (A).
